# FASCICULE DE BREVET EUROPEEN

(11) **EP 0 468 880 B1**
(45) Date de publication et mention de la délivrance du brevet: **24.08.1994**
(21) Numéro de dépôt: 91402048.2
(22) Date de dépôt: 23.07.1991
(51) Int. Cl.: A23L 3/3418, A23L 3/3436, B65D 81/32, B65D 81/26

(54) **Dispositif de conditionnement de systèmes absorbeurs d'oxygène et/ou relargueurs de CO2**
Vorrichtung zur Konditionierung von Sauerstoffabsorbern und/oder Vorrichtungen zum Aussalzen con CO2
Device for conditining oxygen absorbers and/or devices for salting-out CO2

(30) Priorité: 24.07.1990 FR 9009429
(43) Date de publication de la demande: 29.01.1992
(73) Titulaire: ATCO, F-14650 Capriquet (FR)
(72) Inventeur: Hamon, Jean-René, F-35510 Cesson Sevigne (FR); Lapinte, Claude, F-35510 Cesson Sevigne (FR)
(74) Mandataire: Warcoin, Jacques

(56) Documents cités:
- EP-A- 0 083 826
- EP-A- 0 329 897
- US-A- 3 756 389

## Description

La présente invention se rapporte à un conditionnement de systèmes absorbeurs d'oxygène et/ou relargueurs de dioxyde de carbone, permettant leur stockage et leur utilisation dans des conditions optimales. Elle se rapporte en particulier à des systèmes binaires permettant l'absorption d'oxygène, le relargage de CO₂, ou l'association de ces deux fonctions .

De nombreux produits se dégradent au contact de l'oxygène de l'air et doivent donc être conservés à l'abri de l'oxygène. En particulier, les produits alimentaires sont souvent conditionnés sous vide ou sous une atmosphère inerte, car la présence d'oxygène leur cause des détériorations physico-chimiques et biologiques.

L'une des solutions retenues pour éviter ces phénomènes, est l'utilisation de capteurs chimiques d'oxygène. Ces capteurs sont introduits dans l'emballage étanche qui protège le produit, afin d'en éliminer l'oxygène.

La présence de dioxyde de carbone est souvent utile pour ralentir le développement de la flore bactérienne et en particulier de la flore microaérophile.

Afin d'améliorer la conservation de différents produits, plusieurs systèmes ont été envisagés, présentant des fonctions complémentaires telles que absorption de CO₂ (applicable au café), relargage de CO₂, absorption d'humidité ou relargage d'alcool.

Tous ces produits, placés à l'air vont réagir et par conséquent ils doivent être conservés dans une atmosphère inerte et rapidement utilisés dans une ambiance naturelle.

Il importe donc de concilier deux impératifs : d'une part freiner la réactivité pour permettre un temps de manipulation à l'air, et d'autre part avoir une cinétique de réactivité suffisante pour obtenir rapidement dans l'enceinte où ils sont placés les conditions de conservation requises.

Dans le cas des absorbeurs d'oxygène, les solutions retenues jusqu'à présent ont été les suivantes.

Les compositions destinées à absorber l'oxygène présentent en général quatre éléments :
- un mélange réactif à l'oxygène, source d'électrons, le plus souvent de la poudre de fer,
- un matériau support, rétenteur d'eau, comme un gel de silice,
- un électrolyte (NaCl)
- un activateur (charbon actif).

On peut également utiliser un absorbeur organique à base de catéchol, d'acide ascorbique ou de ses sels, de phénol et de fraction de graisse insaturée par exemple.

Ces éléments sont conditionnés dans un sachet perméable à l'oxygène et plus ou moins imperméable à l'eau et à la vapeur d'eau et à l'huile. Ce sachet est formé d'une simple feuille ou de matériaux complexes coextrudés ou laminés, certaines couches ayant pu faire l'objet de perforations pour les rendre plus perméables à l'oxygène.

Ce sachet est placé dans une deuxième pochette, étanche, constituée de matériaux barrière à l'oxygène, permettant le stockage à l'abri de l'oxygène.

Pour leur mise en oeuvre, les sachets sont sortis de la pochette étanche et introduits dans l'emballage de la denrée qu'ils sont censés protéger.

Ils sont donc mis à l'air et il est nécessaire de freiner leur réactivité pour que la quantité d'oxygène absorbée pendant cette période de mise à l'air ne soit pas trop importante.

Les absorbeurs ainsi réalisés présentent une cinétique lente et sont bien adaptés à des produits peu sensibles à l'oxygène pour lesquels il est nécessaire d'atteindre un taux d'oxygène residuel voisin de O en 2 à 3 jours au minimum. C'est le cas pour les produits secs, commes les poissons secs ou la viennoiserie. Ce type d'absorbeurs peut rester à l'air sans conséquences préjudiciables sur leur rendement, pendant 2 à 4 heures avant l'introduction dans l'emballage de la denrée.

Lorsque l'on s'adresse à des produits très sensibles à l'oxygène, en particulier des produits gras ou des produits humides, comme la mayonnaise, les fruits, des solutions d'alimentation, ou même des colles, ce type d'absorbeur est inadapté. En effet, les produits sensibles au développement des microorganismes doivent rapidement se trouver dans une atmosphère appauvrie en oxygène. Les absorbeurs doivent donc présenter une vitesse d'absorption de l'oxygène plus élevée, et dans ce cas un temps de séjour trop prolongé à l'air peut compromettre leur capacité d'absorption ultérieure et donc la fiabilité du système.

C'est pourquoi il est intéressant d'utiliser des absorbeurs d'oxygène activables.

Dans l'état de la technique, la demande de brevet JP-A-87/336660 décrit par exemple un dispositif comportant trois éléments dont l'activation implique la saturation en vapeur d'eau, par exemple par stockage à 40°C pendant trois jours d'une enceinte imperméable à l'oxygène.

Ces produits, s'ils donnent des résultats satisfaisants sur le plan de la vitesse de réactivité, sont difficilement standardisables en ce qui concerne la cinétique d'absorption et doivent être conservés dans une atmosphère parfaitement dépourvue d'oxygène, ce qui impose des contraintes de stockage.

En outre, dans le cas de JP-A-87/336660, les emballages des compartiments doivent être constitués de deux matériaux différents, ce qui implique une technique de production plus complexe.

C'est pourquoi la présente invention se rapporte à un dispositif de conditionnement de systèmes absorbeurs d'oxygène et/ou relargueurs de CO₂, caractérisé en ce qu'il se compose d'un emballage poreux et imperméable à l'eau, divisé en deux compartiments contenant chacun un ou plusieurs constituants, les deux compartiments étant séparés l'un de l'autre par une soudure de faible résistance qui est destinée à être rompue pour créer un compartiment unique au sein duquel se mélangent les constituants contenus initialement dans les deux compartiments séparés.

Ce dispositif peut s'appliquer à différents systèmes chimiques mis sous forme binaire, en particulier des systèmes absorbeurs d'oxygène, mais également des systèmes capables de générer dans l'atmosphère où ils sont placés une teneur définie en dioxyde de carbone. En effet, la présence de CO₂ va inhiber le développement d'un grand nombre d'espèces bactériennes, il est donc intéressant de pouvoir associer les 2 fonctions capteur d'O₂/relargueur de CO₂.

L'emballage du dispositif selon l'invention doit être poreux, de manière à laisser passer les gaz, en particulier l'oxygène et le CO₂. Il est essentiel, comme nous le verrons par la suite, qu'il soit également sensiblement imperméable à l'eau et à la vapeur d'eau. On utilise un seul type d'emballage pour l'ensemble du dispositif.

Par exemple, de bons résultats sont obtenus avec l'utilisation d'un emballage constitué d'une pellicule de polypropylène microperforé de 40 »m d'épaisseur et contrecollée sur du papier à 30 g/m².

Ce dispositif est divisé en deux compartiments grâce à une soudure qui peut facilement être supprimée.

En effet, la résistance de cette soudure de séparation est notablement inférieure à la résistance des soudures périphériques qui délimitent le pourtour du conditionnement.

On peut par exemple obtenir ces soudures de résistance variable par compression à des températures différentes au niveau des fers de soudage.

Les soudures périphériques sur le matériau complexe papier/polypropylène seront créees à une température de 180°C ± 2°C.

La soudure de séparation sera créee à une température de 120°C ± 2°C.

Les deux compartiments déterminés par cette soudure contiennent respectivement deux constituants, ou mélange de constituants, susceptibles de réagir chimiquement ensemble et maintenus ainsi séparés. Ceci permet leur stockage pendant une durée longue, à l'air, sans précaution particulière.

La rupture de cette soudure entraîne la formation d'un compartiment unique et la mise en contact de l'ensemble des constituants, d'où activation du système chimique ainsi créé.

Cette activation peut être réalisée par deux mécanismes complémentaires :
- la soudure intermédiaire est rompue par compression du sachet bi-corps entre deux cylindres, un cylindre d'entraînement et un contre-cylindre, avec une pression de l'ordre de 1 kg/cm².
- le mélange du contenu des deux compartiments est assuré par des vibrations, imposées pendant un temps déterminé. On peut par exemple utiliser une fréquence de l'ordre de 1kHz, pendant 5 à 10 secondes.

Les constituants peuvent être plus ou moins intimement mélangés au moment de la rupture de la cloison, ce qui a pour effet de modifier la vitesse de la réaction.

La mise en oeuvre peut être automatisée, permettant l'obtention d'une vitesse de réaction optimisée.

En outre, la distribution des dispositifs activés et l'élimination des dispositifs activés et non utilisés après un temps prédéfini peuvent être automatisés, accroissant ainsi les facteurs de sécurité pour l'utilisateur.

Ce dispositif permet donc de faire démarrer la réaction au moment souhaité et de s'affranchir de la contrainte de délai de transfert du lieu de stockage au lieu d'activité.

La vitesse de la réaction peut être très rapide, puisqu'aucune réaction avec l'atmosphère n'est à craindre avant l'emploi. La capacité est maximale.

Un des aspects de l'invention concerne un dispositif de conditionnement de système absorbeur d'oxygène tel qu'il a été défini plus haut, caractérisé en ce que l'un des compartiments contient uniquement un agent réducteur de l'oxygène, stable à l'air ambiant, et en ce que l'autre compartiment contient des agents chimiques nécessaires à la mise en oeuvre de l'activité réductrice.

Selon un des aspects de l'invention, l'agent réducteur est de la poudre de fer micronisée (80% inférieurs à 50 »m) avec une surface spécifique élevée (supérieure à environ 150 m²/kg).

Les agents chimiques contenus dans l'autre compartiment comprennent un electrolyte, un support régulateur fluide hydraté et un agent activateur.

Il est très important que le réducteur, en particulier la poudre de fer micronisée, soit maintenu en atmosphère sèche pour qu'il reste chimiquement inerte.

L'autre compartiment, parfaitement isolé contient un support régulateur, fluide pour permettre une bonne homogénéisation de la préparation, pouvant être constitué de particules d'un composé inerte comme l'argile expansée, la kaolinite recuite, la chamotte, la kerfaline ou l'alumine neutre. Ce support doit retenir l'eau. La gamme granulométrique de ces particules est importante. En effet, l'emploi de particules ayant des dimensions différentes, lors du mélange avec la poudre de fer micronisée, favorisera le contact des constituants.

L'électrolyte peut être du NaCl. Des conditions d'hydratation optimales du support sont obtenues en introduisant cet électrolyte sous forme d'une saumure à 17%.

Pour réaliser la rupture de la suture entre les deux compartiments par compression entre deux cylindres, le sachet contenant le support devra être introduit en premier. Le mélange des composants contenus dans les deux compartiments entraînera leur activation chimique et l'absorption d'oxygène, avec une capacité proportionnelle à la quantité des réactifs en présence.

Un autre aspect de l'invention concerne un dispositif de conditionnement de système relargueur de CO₂, divisé en deux compartiments, caractérisé en ce que l'un des compartiments contient un composé chimique générateur de gaz carbonique, en particulier un bicarbonate ou un ascorbate, et un électrolyte, et en ce qu'il contient également une teneur suffisante en eau,
en ce que l'autre compartiment contient un oxydant, en particulier un sel ferrique ou un sel cuivrique, et un agent activateur,
et en ce que chaque compartiment contient en outre un support régulateur fluide.

Le composé chimique générateur de gaz carbonique sera de préférence un bicarbonate ou un ascorbate de composés alcalins ou alcalinoterreux.

L'électrolyte est constitué d'un sel neutre comme du NaCl, sous forme d'une saumure assurant une teneur suffisante en eau pour permettre un déclenchement ultérieur de la réaction. Une teneur optimale en eau est assurée par une saumure à 17%.

Ce premier compartiment contiendra en outre un support régulateur fluide, apte à retenir l'eau, présentant de préférence une granulométrie faible.

L'autre compartiment, parfaitement isolé contient, outre un oxydant classique, comme par exemple un sel ferrique ou cuivrique, un agent activateur, comme le charbon actif. Il contient également un support régulateur fluide, constitué de particules d'un composé inerte, et de granulométrie notablement supérieure à celle du support du premier compartiment.

Dans les deux compartiments, le support fluide permettant une bonne homogénéisation de la préparation pourra être choisi dans le groupe comprenant les particules d'argile expansée, kaolinite recuite, chamotte, kerfaline et alumine neutre.

La rupture de la suture entre les deux compartiments pourra être assurée par cylindrage, l'emploi de particules de granulométries différentes favorisant le mélange des réactifs au moment de l'emploi.

La capacité de relargage de CO₂ est proportionnelle à la quantité des réactifs en présence.

Les deux systèmes binaires absorbeurs d'oxygène et relargueur de CO₂ pourront être conditionnés dans un même dispositif bi-corps, et activés en même temps.

Un mode de réalisation particulier du dispositif selon l'invention est décrit ci-après.

Il s'agit d'un sachet bi-corps, dont l'enveloppe est réalisée dans un complexe papier/OPP (polypropylène microperforé à 40 »m).

La porosité de l'emballage à l'oxygène est de l'ordre de 10⁵ cm³ d'O₂/m² et par 24 heures, à une température de 23°C et à 0% d'humidité relative.

La perméabilité à la vapeur d'eau est d'environ 20 g/m² par 24 heures, à une température de 38°C et à 90% d'humidité relative.

Le sachet est fermé hermétiquement à sa périphérie par une soudure continue. Cette soudure peut être obtenue par compression à 180°C ± 2°C. Les dimensions extérieures du sachet sont de 8 x 4 cm.

Ce sachet est subdivisé en deux compartiments séparés de façon parfaitement étanche par une soudure, de résistance plus faible que celle de la soudure phériphérique. La soudure de séparation est obtenue par compression à 120°C ± 2°C. Les deux compartiments ont chacun respectivement pour dimension 4 cm x 4 cm.

L'un des compartiments contient 2,2 g de poudre de fer micronisée, de dimension particulaire à 80% à 50 »m.

L'autre compartiment contient 2,3 g de kaolinite pulvérisée, 0,8 ml de saumure à 17% et 0,05 g de charbon actif à titre d'activateur.

Ce dispositif est chimiquement inerte et peut être stocké tel quel à l'air libre pour de courtes durées (quelques heures à quelques jours), pour de longues durées (jusqu'à plusieurs mois) il devra être suremballé dans une enveloppe imperméable à la vapeur d'eau.

Lorsque la séparation est rompue, les réactifs contenus dans les deux compartiments vont se trouver en contact et donner un mélange chimiquement actif qui va absorber l'oxygène.

La vitesse d'absorption dépendra du mélange plus ou moins intime des réactifs, qui peut être réalisé par vibration (1 kHz pendant 5 à 10 secondes).

La capacité totale de ce système, proportionnelle à la quantité de réactifs, est de 597 ml d'oxygène.

Les exemples qui suivent sont destinés à illustrer l'invention sans aucunement en limiter la portée.

### EXEMPLE 1 : MODE DE REALISATION D'UN DISPOSITIF D'ABSORBEUR BINAIRE D'OXYGENE

Un sachet de 8 cm x 4 cm, est séparé par une soudure de faible résistance en deux compartiments de 4 cm x 4 cm chacun.

Dans un compartiment sont placés 1,8 à 2,6 g de fer.

Dans l'autre compartiment sont placés :

| | |
|---|---|
| - kaolinite | 1,8 à 2,6 g |
| - C actif | 0,04 à 0,07 g |
| - saumure à 15/20% | 0,7 à 1 ml. |

Le sachet à une masse totale de 4 à 6 g.

Après mélange des constituants, sa capacité d'absorption est de 400 à 600 ml d'oxygène.

### EXEMPLE 2

Un autre mode de réalisation du dispositif d'absorbeur binaire d'oxygène est rapporté, dans un sachet de mêmes dimensions que dans l'exemple 1:

| | | |
|---|---|---|
| - compartiment 1 | fer | 1,4 à 2 g |
| - compartiment 2 | kaolinite | 1,4 à 2 g |
| | C actif | 0,03 à 0,05 g |
| | saumure à 15/20% | 0,5 à 0,7 ml |

Le sachet à une masse totale de 3,5 à 4,5 g.

Après mélange des constituants, sa capacité d'absorption est de 250 à 400 ml d'oxygène.

### EXEMPLE 3

Un autre mode de réalisation du dispositif d'absorbeur binaire d'oxygène est rapporté, dans un sachet de mêmes dimensions que dans l'exemple 1:

| | | |
|---|---|---|
| - compartiment 1 | fer | 0,65 à 1 g |
| - compartiment 2 | kaolinite | 0,65 à 1 g |
| | C actif | 0,015 à 0,025 g |
| | saumure à 15/20% | 0,25 à 0,35 ml |

Le sachet à une masse totale de 1,8 à 2,5 g.

Après mélange des constituants, sa capacité d'absorption est de 150 à 250 ml d'oxygène

### EXEMPLE 4 : MODE DE REALISATION D'UN GENERATEUR BINAIRE DE DIOXYDE DE CARBONE

Un sachet de 8 cm x 4 cm est séparé par une soudure de faible résistance en deux compartiments de 4 cm x 4 cm chacun, contenant respectivement :

| | | |
|---|---|---|
| - compartiment 1 | NaHCO₃ | 0,4 à 0,6 g g |
| | kaolinite fine | 0,2 à 0,3 g |
| | saumure 15 à 20% | 0,04 à 0,06 g |
| | total | 0,7 à 0,9 g |
| - compartiment 2 | CuCl₂ | 1 à 1,5 g |
| | kaolinite grossière | 0,2 à 0,3 g |
| | C actif | 0,04 à 0,06 g |
| | total | 1,3 à 1,8 g |

La masse totale du sachet est de 2 à 2,8 g.

Après mélange des constituants, la capacité de libération de CO₂ est de 60 à 120 ml, avec un temps de relargage à 20°C de 2 heures.

### EXEMPLE 5

Un autre mode de réalisation du dispositif de générateur binaire de dioxyde de carbone est rapporté, dans un sachet de mêmes dimensions que dans l'exemple 4 :

| | | |
|---|---|---|
| - compartiment 1 | NaHCO₃ | 0,4 à 0,6 g |
| | kaolinite fine | 0,2 à 0,3 g |
| | saumure à 15/20% | 0,3 à 0,5 g |
| | total | 1 à 1,3 g |
| - compartiment 2 | CuCl₂ | 1 à 1,5 g |
| | kaolinite grossière | 0,2 à 0,3 g |
| | C actif | 0,04 à 0,06 g |
| | total | 1,3 à 1,8 g |

La masse totale du sachet est de 2,5 à 3 g.

Après mélange des constituants, la capacité de libération de CO₂ est de 50 à 80 ml, avec un temps de relargage à 20°C de 90 heures.

### EXEMPLE 6

Un sachet de 6 cm x 2 cm est séparé en deux compartiments, contenant respectivement :

| | | |
|---|---|---|
| - compartiment 1 | NaHCO₃ | 0,8 à 1,2 g |
| | kaolinite fine | 0,4 à 0,6 g |
| | saumure à 17% | 0,4 à 0,6 g |
| | total | 1,8 à 2,2 g |
| - compartiment 2 | CuCl₂ | 1,2 à 1,8 g |
| | kaolinite grossière | 0,4 à 0,6 g |
| | C actif | 0,08 à 0,12 g |
| | total | 1,8 à 2,5 g |

La masse totale du sachet est de 3,6 à 4,5 g.

Après mélange des constituants, la capacité de libération de CO₂ est de 100 à 180 ml, avec un temps de relargage à 20°C de 60 heures.

### EXEMPLE 7 : MODE DE REALISATION D'UN ABSORBEUR D'O₂/GENERATEUR DE CO₂

Un sachet de 8 cm x 4 cm est séparé par une soudure de faible résistance en deux compartiments de 4 cm x 4 cm chacun, contenant respectivement :

| | | |
|---|---|---|
| - compartiment 1 | NaHCO3 | 1,0 g |
| | kaolinite fine | 1,5 g |
| | Saumure à 17% | 1,0 ml |
| | Agar-agar | 0,31 g |
| - compartiment 2 | CuCl₂,2H₂0 | 2,0 g |
| | kaolinite grossière | 0,25 g |
| | C actif | 0,20 g |
| | fer | 1,1 g |

La masse totale du sachet est de 7,36 g.

Après mélange de constituants, la capacité de libération du C0₂ est de 140 ml, et la capacité d'absorption d'oxygène est de 110 ml, avec un temps de relargage de 20 heures à 25°C.

## Revendications

1. Dispositif de conditionnement de systèmes absorbeurs d'oxygène et/ou relargueurs de CO₂, caractérisé en ce qu'il se compose d'un emballage poreux et imperméable à l'eau, divisé en deux compartiments contenant chacun un ou plusieurs constituants, les deux compartiments étant séparés l 'un de l'autre par une soudure de faible résistance qui est destinée à être rompue pour créer un compartiment unique au sein duquel se mélangent les constituants contenus initialement dans les deux compartiments séparés.

2. Dispositif de conditionnement selon la revendication 1, caractérisé en ce que la résistance de la soudure de séparation est notablement inférieure à la résistance des soudures phériphériques de l'ensemble du conditionnement.

3. Dispositif selon l'une des revendications 1 ou 2, caractérisé en ce que la soudure de faible résistance peut être rompue par cylindrage.

4. Dispositif selon l'une des revendications 1 à 5, caractérisé en ce que l'un des compartiments contient uniquement un agent réducteur de l'oxygène, stable à l'air pur, et en ce que l'autre compartiment contient des agents chimiques nécessaires à la mise en oeuvre de l'activité réductrice.

5. Dispositif selon la revendication 4, caractérisé en ce que l'agent réducteur est de la poudre de fer micronisée.

6. Dispositif selon l'une des revendications 4 ou 5, caractérisé en ce que les agents chimiques comprennent un électrolyte, un support régulateur fluide hydraté et un agent activateur.

7. Dispositif selon l'une des revendications 1 à 6, caractérisé en ce que le mélange des composants contenus dans les deux compartiments consécutif à la rupture de la soudure de faible résistance les séparant, entraîne l'absorption d'oxygène, avec une capacité proportionnelle à la quantité des réactifs en présence.

8. Dispositif selon l'une des revendications 1 à 3, caractérisé en ce que l'un des compartiments contient un composé chimique générateur de gaz carbonique, en particulier un bicarbonate ou un ascorbate et un électrolyte et en ce qu'il contient également une teneur suffisante en eau,
en ce que l'autre compartiment contient un oxydant, en particulier un sel ferrique ou un sel cuivrique, et un agent activateur,
et en ce que chaque compartiment contient en outre un support régulateur fluide.

9. Dispositif selon l'une des revendications 6 à 8, caractérisé en ce que le support régulateur fluide est constitué de particules d'un composé inerte choisi dans le groupe comprenant : argile expansée, kaolinite recuite, chamotte, kerfaline, et alumine neutre,
et en ce que ce support est constitué de préférence de particules de dimensions différentes.

10. Dispositif selon l'une des revendications 6 à 9, caractérisé en ce que l'agent activateur est du charbon actif.

## Claims

1. Packaging device for oxygen-absorbing and/or CO₂-releasing systems, characterized in that it is composed of a porous and water-impermeable container, divided into two compartments each containing one or a number of constituents, the two compartments being separated from each other by a low-strength weld which is intended to be broken to create a single compartment within which the constituents initially contained in the two separate compartments are mixed.

2. Packaging device according to Claim 1, characterized in that the strength of the separating weld is appreciably less than the strength of the peripheral welds of the packaging assembly.

3. Device according to one of Claims 1 or 2, characterized in that the low-strength weld can be broken by rolling.

4. Device according to one of Claims 1 to 3, characterized in that one of the compartments contains solely a reducing agent for the oxygen, stable to pure air, and in that the other compartment contains chemical agents necessary for the implementation of the reducing activity.

5. Device according to Claim 4, characterized in that the reducing agent is micronized iron powder.

6. Device according to one of Claims 4 or 5, characterized in that the chemical agents comprise an electrolyte, a hydrated fluid regulating vehicle and an activating agent.

7. Device according to one of Claims 1 to 6, characterized in that the mixture of the components contained in the two compartments as a result of breaking the low-strength weld which separates them leads to the absorption of oxygen, with a capacity proportional to the amount of the composing reactants.

8. Device according to one of Claims 1 to 3, characterized in that one of the compartments contains a chemical compound which generates carbon dioxide gas, in particular a bicarbonate or an ascorbate, and an electrolyte and in that it also contains a sufficient water content,
in that the other compartment contains an oxidizing agent, in particular a ferric salt or a cupric salt, and an activating agent,
and in that each compartment additionally contains a fluid regulating vehicle.

9. Device according to one of Claims 6 to 8, characterized in that the fluid regulating vehicle consists of particles of an inert compound chosen from the group comprising: expanded clay, rebaked kaolinite, grog, kerfalin and neutral alumina,
and in that this vehicle preferably consists of particles of different sizes.

10. Device according to one of Claims 6 to 9, characterized in that the activating agent is active charcoal.

## Patentansprüche

1. Einrichtung zur Konditionierung von Systemen zur Absorption von Sauerstoff und/oder zur Aussalzung von CO₂, dadurch gekennzeichnet, daß sie besteht aus einer porösen und für Wasser undurchlässigen Umhüllung, die in zwei Abteile unterteilt ist, von denen jedes einen oder mehrere Bestandteile enthält, wobei die beiden Abteile voneinander getrennt sind durch eine Verschweißung (Schweißnaht) mit einer geringen Beständigkeit, die bestimmt ist zur Öffnung zur Schaffung eines einzigen Abteils, in dem die Bestandteile, die ursprünglich in den beiden getrennten Abteilen enthalten waren, sich mischen.

2. Konditionierungseinrichtung nach Anspruch 1, dadurch gekennzeichnet, daß die Beständigkeit der Verschweißung (Schweißnaht) wesentlich geringer ist als die Beständigkeit der Umfangsverschweißungen der gesamten Konditioniereinrichtung.

3. Einrichtung nach einem der Ansprüche 1 oder 2, dadurch gekennzeichnet, daß die Verschweißung (Schweißnaht) mit geringer Beständigkeit durch Walzen geöffnet werden kann.

4. Einrichtung nach einem der Ansprüche 1 bis 3, dadurch gekennzeichnet, daß eines der Abteile nur ein Sauerstoff-Reduktionsmittel enthält, das gegenüber reiner Luft beständig ist, und daß das andere Abteil die für das Ingangsetzen der Reduktionsaktivität erforderlichen chemischen Agentien enthält.

5. Einrichtung nach Anspruch 4, dadurch gekennzeichnet, daß es sich bei dem Reduktionsmittel um fein gemahlenes Eisenpulver handelt.

6. Einrichtung nach einem der Ansprüche 4 oder 5, dadurch gekennzeichnet, daß die chemischen Agentien umfassen einen Elektrolyten, einen wasserhaltigen, fließfähigen (fluiden) Regulator-Träger und einen Aktivator.

7. Einrichtung nach einem der Ansprüche 1 bis 6, dadurch gekennzeichnet, daß das Mischen der in den beiden Abteilen enthaltenen Komponenten nach dem Öffnen der sie trennenden verschweißung (Schweißnaht) mit geringer Beständigkeit zur Absorption von Sauerstoff mit einer Kapazität führt, die proportional zur Menge der vorhandenen Reagentien ist.

8. Einrichtung nach einem der Ansprüche 1 bis 3, dadurch gekennzeichnet, daß eines der Abteile eine chemische Verbindung, die Kohlendioxidgas bildet, insbesondere ein Bicarbonat oder ein Ascorbat, und einen Elektrolyten enthält, und daß es außerdem einen ausreichenden Wassergehalt aufweist,
daß das andere Abteil ein Oxidationsmittel, insbesondere ein Eisen(III)salz oder ein Kupfer(II)salz und einen Aktivator enthält und
daß jedes Abteil außerdem einen fließfähigen (fluiden) Regulator-Träger enthält.

9. Einrichtung nach einem der Ansprüche 6 bis 8, dadurch gekennzeichnet, daß der fließfähige (fluide) Regulator-Träger aus Teilchen einer inerten Verbindung besteht, die ausgewählt wird aus der Gruppe Blähton, gebrannter Kaolinit, Schamotte, Kerfalin und neutrales Aluminiumoxid, und daß dieser Träger vorzugsweise besteht aus Teilchen mit unterschiedlichen Dimensionen.

10. Einrichtung nach einem der Ansprüche 6 bis 9, dadurch gekennzeichnet, daß es sich bei dem Aktivator um Aktivkohle handelt.
